# EUROPEAN PATENT APPLICATION

(11) **EP 0 968 975 A1**
(43) Date of publication of application: **05.01.2000**
(21) Application number: 98961424.3
(22) Date of filing: 18.12.1998
(51) Int. Cl.: C03C 23/00, C03C 21/00, G11B 5/62, G11B 5/84

(54) **PROCESS FOR PRODUCING GLASS SUBSTRATE FOR INFORMATION RECORDING MEDIUM AND INFORMATION RECORDING MEDIUM CONTAINING GLASS SUBSTRATE PRODUCED BY THE PROCESS**

(30) Priority: 19.12.1997 JP 36532697
(71) Applicant: Hoya Corporation, Shinjuku-ku, Tokyo 161-0032 (JP)
(72) Inventor: SHINKUMA, Yoshikane Hoya Corporation, Tokyo 161-0032 (JP); TORATANI, Hisayoshi Hoya Corporation, Tokyo 161-0032 (JP)
(74) Representative: Read, Matthew Charles
(86) International application number: JP9805750
(87) International publication number: WO9932414

(57) **Abstract**

A glass substrate for an information recording medium containing alkali ions is steeped and treated in a fused salt of pyrosulfate (potassium pyrosulfate, sodium pyrosulfate, or the like) and/or a fused salt of hydrogensulfate (potassium hydrogensultate, sodium hydrogensulfate, or the like). The treated glass substrate is cleaned. At least a recording layer is formed on the manufactured glass substrate to prepare the information recording medium.

## Description

### Technical Field

The present invention relates to a method of manufacturing a glass substrate for an information recording medium and an information recording medium using the glass substrate manufactured by the method.

### Background Art

Recently, a glass substrate superior to other materials in various characteristics has commanded public attention as a substrate for an information recording medium. For example, an aluminum substrate has been frequently used as a substrate for a magnetic disk, but with a demand for miniaturization and thinning of the magnetic disk or for a low flying magnetic head, a percentage of use of the glass substrate is increasing because it can be miniaturized or thinned more easily, has a higher flatness and can realize the low floating magnetic head more easily as compared with the aluminum substrate.

For the glass substrate for the information recording medium, for purpose of enhancing shock resistance or vibration resistance and preventing the substrate from being broken by shock or vibration, a glass substrate containing alkali ions whose strength can be enhanced by chemically strengthening a glass substrate surface is frequently used.

When the glass substrate containing the alkali ions is used as the substrate for information recording medium, elution of the alkali ions contained in the glass substrate raises a problem, and it is desirable to suppress the elution of the alkali ions to the utmost.

For example, the alkali ions in glass are replaced with alkali ions larger in ion radius, and a strong compression stress is generated on a glass surface layer by increasing a volume of ion exchange section to reinforce a glass surface. According to a principle of such ion exchange method, the glass substrate containing the alkali ions needs to be used. In this case, however, the elution of alkali ions from the glass substrate after the ion exchange treatment raises a problem.

Moreover, there is a type of the glass substrate for information recording medium containing the alkali ions which has a predetermined strength without being subjected to the chemical strengthening treatment, but the elution of alkali ions causes a problem even in this case.

As described above, when the glass substrate for information recording medium containing the alkali ions is used, the elution of alkali ions produces a problem, but a sufficient technique for suppressing the elution of alkali ions at a high level has not been developed yet.

The present invention has been created under the aforementioned background, and an object thereof is to provide a method of manufacturing a glass substrate for information recording medium in which elution of alkali ions from the glass substrate is suppressed at a high level and an information recording medium using the glass substrate manufactured by the method.

### Disclosure of the Invention

As a result of researches extended in order to attain the above-mentioned object, the present inventors et al. have found that elution of alkali ions can remarkably be suppressed by steeping and treating a glass substrate for information recording medium containing alkali ions in pyrosulfate or another fused salt, and have completed the present invention.

Here, a likely reason (mechanism) for which the elution of alkali ions from the glass substrate can be suppressed at a high level by steeping and treating the glass substrate in pyrosulfate or another fused salt is that in a non-crosslinking state of Si-O-Na present on an uppermost surface layer of glass, hydronium ions generated from moisture contained in pyrosulfate and Na⁺ in Si-O-Na are exchanged to form a silanol radical (Si-O-H), subsequently the silanol radical is heated and dehydrated, and crosslinking of Si-O-Si is performed on a glass surface.

Specifically, the present invention is constituted as follows:
(Constitution 1) A method of manufacturing a glass substrate for an information recording medium comprising a step of bringing the glass substrate for the information recording medium containing alkali ions in contact with a fused salt of pyrosulfate and/or a fused salt of hydrogensulfate.
(Constitution 2) A method of manufacturing a glass substrate for an information recording medium comprising a step of bringing the glass substrate for the information recording medium containing alkali ions in contact with a fused salt obtained by applying sulfuric acid to a fused salt of pyrosulfate and/or a fused salt of hydrogensulfate.
(Constitution 3) The method of manufacturing the glass substrate for the information recording medium according to constitution 1 or 2 wherein the fused salt comprises a fused salt of one or two or more salts selected from potassium pyrosulfate, sodium pyrosulfate, potassium hydrogensulfate, and sodium hydrogensulfate.
(Constitution 4) The method of manufacturing the glass substrate for the information recording medium according to any one of constitutions 1 to 3 wherein a temperature of the fused salt is in the range of a fusing temperature or a liquid-phase temperature to 400°C.
(Constitution 5) The method of manufacturing the glass substrate for the information recording medium according to any one of constitutions 1 to 4 wherein the temperature of the fused salt is in the range of 250°C to 350°C.
(Constitution 6) The method of manufacturing the glass substrate for the information recording medium according to any one of constitutions 1 to 5 wherein the temperature of the fused salt is in the range of 250°C to 300°C.
(Constitution 7) The method of manufacturing the glass substrate for the information recording medium according to any one of constitutions 1 to 6 wherein a treatment time by the fused salt is in the range of one minute to 30 minutes.
(Constitution 8) The method of manufacturing the glass substrate for the information recording medium according to any one of constitutions 1 to 7 wherein the glass substrate for the information recording medium is a glass substrate subjected to a chemical strengthening treatment.
(Constitution 9) The method of manufacturing the glass substrate for the information recording medium according to any one of constitutions 1 to 8 wherein the glass substrate for the information recording medium is a glass substrate for use in a magnetic disk reproduced on a magnetic reluctance type head.
(Constitution 10) An information recording medium comprising at least a recording layer formed on a glass substrate for the information recording medium obtained using the method of manufacturing the glass substrate for the information recording medium according to any one of constitutions 1 to 9.

In the present invention, the glass substrate for information recording medium containing alkali ions is steeped and treated in the fused salt of pyrosulfate or the like, so that elution of alkali ions can remarkably be suppressed. Therefore, change of properties (burn mark or the like) of the glass surface or generation of foreign particles attributed to movement of alkali metal ions to the surface can remarkably be suppressed.

Moreover, according to information recording medium of the present invention, since the glass substrate with the elution of alkali ions being remarkably suppressed is used, an information recording medium superior in weatherability and life and having high reliability can be manufactured.

### Brief Description of the Drawings

Fig. 1 is a chart showing results of a case where an aluminosilicate glass substrate is steeped and treated in a fused salt of potassium pyrosulfate.
Fig. 2 is a chart showing results of a case where a silicate glass substrate containing high-valence metal ions is steeped and treated in the fused salt of potassium pyrosulfate.
Fig. 3 is a chart showing results of a case where the silicate glass substrate containing the high-valence metal ions is steeped and treated in a fused salt of sodium pyrosulfate.
Fig. 4 is a chart showing results of a case where the silicate glass substrate containing the high-valence metal ions is steeped and treated in a fused mixture salt of potassium pyrosulfate and sodium pyrosulfate.

### Best Mode for Carrying out the Invention

A mode for carrying out the present invention will be described hereinafter in detail.

In a method of manufacturing a glass substrate for an information recording medium of the present invention, the glass substrate for information recording medium containing alkali ions is contacted and treated in a fused salt of pyrosulfate and/or a fused salt of hydrogensulfate.

Here, the pyrosulfate is a salt of pyrosulfuric acid (H₂S₂O₇), and represented in a general formula of M₂S₂O₇ (M denotes an alkali metal, alkaline earth metal, another metal, ammonium, or the like).

When one mol of water is extracted from two mols of hydrogensulfate (MHSO₄ (M denotes a metal)), pyrosulfate is formed. When hydrogensulfate is fused to form a fused salt, water is lost to form pyrosulfate. In this case, water is evaporated, but a slight amount of water remaining in the fused salt takes part in mechanism for preventing alkali ions from being eluted.

Examples of pyrosulfate include an alkali metal, alkaline earth metal, ammonium, zinc, thallium (I), lead (II), iron (II), uranyl and another salt. In view of safety, environmental protection, economy, handling and other properties, potassium pyrosulfate, sodium pyrosulfate, and the like are preferable.

Examples of hydrogensulfate include alkali metals (Li, Na, K, Rb, Cs), alkaline earth metals (Mg, Ca, Sr, Ba), ammonium, thallium, lead, vanadium, bismuth, rhodium, and other salts. In view of safety or other properties, potassium hydrogensulfate, sodium hydrogensulfate, and the like are preferable.

The pyrosulfate or the hydrogensulfate can be used alone, or a mixture of pyrosulfate and hydrogensulfate can also be used. Moreover, the pyrosulfate or the hydrogensulfate can be used by mixing two or more different salts. In this case, the mixture ratio can appropriately be adjusted. Furthermore, another component can be applied to the fused salt in a range which fails to deteriorate the effect of the present invention.

Since the pyrosulfate can also be obtained by applying sulfuric acid to sulfate, the pyrosulfate may be prepared by dehydrating hydrogensulfate obtained by applying the sulfuric acid to the sulfate.

When treatment is performed using pyrosulfate or another salt for a long time, sulfate crystals are deposited in the fused salt by the alkali ions removed from the glass, but the hydrogensulfate and/or the pyrosulfate can be returned by applying sulfuric acid to the sulfate crystals.

Since the sulfuric acid fails to obstruct the fused salt treatment by pyrosulfate or the like, it may be applied into the fused salt to perform treatment, before the sulfate crystals are deposited.

Here, the "contact" with the fused salt indicates steeping of the glass substrate into the fused salt, and further includes a case where only one surface of the glass substrate is brought in contact with the fused salt.

A temperature of fused salt may be equal to or higher than a fusing temperature or a liquid-phase temperature of salt. The effect of suppressing the elution of alkali ions does not depend much on the temperature, but in the range of 275 to 300°C or more, the elution of alkali ions preferably turns to zero or substantially zero. On the other hand, considering from a long-time reliability when surface hardness is lowered by blue burn marks on the glass surface and the information recording medium is obtained by forming a recording layer, the temperature is preferably in the range of 350°C to 400°C. Furthermore, considering that a chemical strengthening layer of the glass chemically reinforced by ion exchange is eliminated and the strength is lowered, the temperature is preferably in the range of 300°C to 350°C.

From the aforementioned point of view, the temperature of fused salt is preferably in the range of the fusing temperature or the liquid-phase temperature to 400°C (more preferably the fusing temperature or the liquid-phase temperature to 350°C), for a glass not chemically reinforced the temperature is more preferably in the range of 250°C to 350°C (further preferably 270°C to 350°C), and for the chemically reinforced glass the temperature is more preferably in the range of 250°C to 300°C (further preferably 270°C to 300°C).

Additionally, a melting point of potassium pyrosulfate is 300°C or more (document value), but a guaranteed reagent is in a fused state even at 225°C because a part thereof absorbs moisture to form hydrogensulfate. In this manner the actual fusing temperature is sometimes different from the melting point. A melting point of potassium hydrogensulfate is 210°C. A melting point of sodium hydrogensulfate is 185.7°C.

For a treatment time by the fused salt, the effect of suppressing alkali elution does not depend much on the treatment time. For example, even when the treatment time is lengthened to about five minutes or more, the effect of suppressing the alkali elution does not largely differ. This shows that the treatment time by the fused salt is preferably about one minute to 30 minutes, and in consideration of treatment efficiency, productivity, or the like the time is more preferably about five to ten minutes.

Additionally, the treatment by the fused salt of pyrosulfate or the like does no damage to the glass substrate. Moreover, the treatment by the fused salt of pyrosulfate or the like has an effect of removing iron powder and another contaminant, and also has an effect of removing the fused salt deposited in the chemical strengthening treatment.

The glass substrate is not especially limited as long as it is a glass substrate containing alkali ions. Moreover, the size, thickness, or the like of the glass substrate is not especially limited.

Examples of the glass substrate containing the alkali ions include an aluminosilicate glass, silicate glass (glass with high Young's modulus) containing high-valence metal ions (e.g., Ti, Y and the like), soda lime glass, soda aluminosilicate glass, aluminoborosilicate glass, borosilicate glass, chain silicate glass, and the like.

Additionally, the aluminosilicate glass or the like is preferably chemically reinforced to enhance its shock resistance and vibration resistance.

The aluminosilicate glass is preferably a glass for chemical reinforcement which contains main components of 62 to 75 wt% of SiO₂, 5 to 15 wt% of Al₂O₃, 4 to 10 wt% of Li₂O, 4 to 12 wt% of Na₂O, and 5.5 to 15 wt% of ZrO₂, a weight ratio of Na₂O to ZrO₂ being in the range of 0.5 to 2.0, a weight ratio of Al₂O₃ to ZrO₂ being in the range of 0.4 to 2.5; a glass for chemical reinforcement which contains main components of 62 to 75 wt% of SiO₂, 5 to 15 wt% of Al₂O₃, 0.5 to 5 wt% of B₂O₃, 4 to 10 wt% of Li₂O, 4 to 12 wt% of Na₂O, 0.5 to 5 wt% of MgO, 0.5 to 5 wt% of CaO, and 0.01 to 1.0 wt% of Sb₂O₃; or the like.

Moreover, in order to eliminate protrusions generated on the glass substrate surface because of undissolved substances of ZrO₂, a glass for chemical reinforcement is preferably used, which contains, in terms of mol%, 57 to 74% of SiO₂, 0 to 2.8% of ZrO₂, 3 to 15% of Al₂O₃, 7 to 16% of LiO₂, and 4 to 14% of Na₂O.

When the aluminosilicate glass having such composition is chemically reinforced, its three properties, i.e., compression stress, tensile stress and compression stress layer depth can be controlled with good balance, it is superior in flexural strength and thermal resistance, little Na or the like is deposited even under a high-temperature environment, its flatness is maintained, and it is also superior in Knoop hardness.

Additionally, the glass substrate may be a glass substrate containing alkali ions requiring no chemical reinforcement.

In the present invention, the glass substrate chemically reinforced by steeping the glass substrate in a heated chemical strengthening treatment liquid and exchanging ions on a glass substrate surface layer with ions in the chemical strengthening treatment liquid can be subjected to the above-mentioned treatment by the fused salt.

Here, a low-temperature type ion exchange method, high-temperature type ion exchange method, surface crystallization method, or the like is known as the ion exchange method, but the low-temperature type ion exchange method is preferably used because a high strength can easily be obtained and no deformation occurs.

In the low-temperature type ion exchange method, in a temperature range of a glass transition temperature (Tg) or less, alkali ions in glass are replaced with alkali ions larger in ion radius, and a strong compression stress is generated on a glass surface layer by increasing a volume of ion exchange section to reinforce a glass surface.

Examples of the chemical strengthening treatment liquid include potassium nitrate (KNO₃), sodium nitrate (NaNO₃), potassium carbonate (K₂CO₃), or another fused salt, a fused mixture salt thereof (e.g., KNO₃+NaNO₃, KNO₃+K₂CO₃, and the like), or a fused salt obtained by mixing the salt with ion salt of Cu, Ag, Rb, Cs, or the like.

From a viewpoint of glass transition point, a heating temperature is preferably in the range of 350°C to 650°C, particularly 350°C to 500°C, further 350°C to 450°C.

From a viewpoint of the flexural strength and compression stress layer, a steeping time is preferably about one hour to 20 hours.

In order to enhance the shock resistance and vibration resistance, the thickness of the compression stress layer formed on the glass substrate surface layer is preferably about 60 to 300 µm.

In the present invention, in order to prevent the glass substrate from cracking or crazing, the glass substrate is preferably preheated to 200 to 350°C, before the glass substrate is treated with the fused salt (the fused salt of pyrosulfate, or the chemical strengthening treatment liquid).

In the treatment by the fused salt of pyrosulfate or the chemical strengthening treatment liquid, the glass substrate is preferably treated with its end face being held. This avoids a case where while the surface of the glass substrate is partly held, the held portion is not treated.

In the present invention, after the treatment by the fused salt of pyrosulfate or the chemical strengthening treatment liquid, the glass substrate is preferably lifted up from the fused salt, and slowly cooled down to a predetermined temperature in such a manner that generation of thermal strains is prevented. Damages by the thermal strain can be avoided by such slow cooling.

A rate for slowly cooling the glass substrate is preferably in the range of 2°C/min. to 100°C/min., especially 5°C/min. to 60°C/min., further 10°C/min. to 50°C/min.

In the present invention, after the slow cooling, for example, the glass substrate is preferably quenched at a rate at which the fused salt deposited on the glass substrate surface is inhibited from being crystallized. When the glass substrate is quenched in this manner, the deposited fused salt becomes brittle, and the fused salt can easily be removed in a process of treatment by the fused salt of pyrosulfate or the like or in a cleaning process.

A rate for quenching the glass substrate is preferably in the range of 1600°C/min. to 200°C/min., especially 1200°C/min. to 300°C/min., further 800°C/min. to 400°C/min.

From a viewpoint of heat shock for identifying defects, the glass substrate is preferably quenched while contacting a coolant in the range of preferably 100°C to 0°C, more preferably 40°C to 10°C.

From a viewpoint of properties for cleaning the deposited fused salt, a time when the glass substrate is in contact with the coolant is preferably about 10 to 60 minutes.

Exemplified as the coolant is water, hot water, solution or another liquid coolant, nitrogen gas, steam, cooling air or another gas coolant, or sprayed air.

In the present invention, if necessary, the glass substrate subjected to the chemical strengthening treatment, or the surface of the glass substrate not subjected to the chemical strengthening treatment can be treated with the fused salt of pyrosulfate or the like.

In the present invention, after an optional process in manufacturing processes, if necessary, cleaning by marketing detergent (neutral detergent, surface-active agent, alkali detergent, or the like), scrubbing, pure water cleaning, solvent cleaning, solvent evaporation drying, centrifugal separation drying or another known cleaning treatment can be performed. Moreover, in each cleaning, heating or ultrasonic wave application may be performed.

The ultrasonic wave may be of either a multifrequency type which oscillates in a certain frequency range or a fixed frequency type which oscillates at a constant frequency. The frequency is determined considering that the lower frequency provides a higher cleaning effect but does more damage on the glass substrate.

Since the evaporation drying has a fast drying rate, stains are not easily generated by drying. Examples of the solvent for use in the evaporation drying include isopropyl alcohol. Freon, acetone, methanol, ethanol, and the like.

The method of manufacturing the glass substrate for the information recording medium of the present invention can also be used as a method of manufacturing a glass substrate for a magnetic disk, a glass substrate for a magnetic optical disk, or a disk substrate for an optical memory disk or another electron optical medium.

Particularly, the glass substrate for the information recording medium of the present invention can preferably be used as a glass substrate for use in the magnetic disk which is reproduced on a magnetic reluctance type head. Specifically, when the glass substrate having much better surface state as compared with the conventional substrate is used in the magnetic disk for the magnetic reluctance type head, there occurs no bed crash attributed to foreign particles generated by the elution of alkali ions, burning or the like. Moreover, no defect attributed to the elution of alkali ions, burning, or the like is generated on a magnetic layer or another film, and no error is caused.

The information recording medium of the present invention will next be described.

The information recording medium of the present invention is characterized in that at least a recording layer is formed on the glass substrate for the information recording medium obtained using the aforementioned method of the present invention.

Here, a known recording layer or another known layer can be used.

For the information recording medium of the present invention, since the glass substrate for the information recording medium with the elution of alkali ions being remarkably suppressed is used, an information recording medium superior in weatherability and life and having high reliability can be obtained.

A magnetic recording medium as an example of the information recording medium will be described hereinafter.

The magnetic recording medium is usually manufactured by successively laminating a underlayer, magnetic layer, concave/convex forming layer, protective layer, lubricant layer, and the like on the glass substrate for the magnetic disk as required.

The underlayer in the magnetic recording medium is appropriately selected in accordance with the magnetic layer.

For example, exemplified as the underlayer is a underlayer comprising at least one or more materials selected from non-magnetic metals such as Cr, Mo, Ta, Ti, W, V, B, Al, and the like. For the magnetic layer mainly composed of Co, in view of enhancement of magnetic properties or the like, a single Cr or a Cr alloy is preferable. Moreover, the underlayer is not limited to a single layer, and may be constituted by laminating a plurality of the same type or different types of layers. For example, Cr/Cr, Cr/CrMo, Cr/CrV, CrV/CrV, Al/Cr/CrMo, Al/Cr/Cr, and another multilayered underlayer are used.

The material of the magnetic layer is not especially limited.

Specifically, exemplified as the magnetic layer is CoPt, CoCr, CoNi, CoNiCr, CoCrTa, CoPtCr, CoNiPt, CoNiCrPt, CoNiCrTa, CoCrPtTa, CoCrPtSiO, and another magnetic thin film mainly composed of Co. Moreover, a multilayered structure may be obtained by dividing the magnetic layer with a non-magnetic film (e.g., Cr, CrMo, CrV or the like) to reduce noises (e.g., CoPtCr/CrMo/CoPtCr, CoCrTaPt/CrMo/CoCrTaPt or the like).

The magnetic layer for the magnetic reluctance type head (MR head) or a great magnetic reluctance type head (GMR head) comprises a Co alloy which contains impurity elements selected from Y, Si, rare earth element, Hf, Ge, Sn, Zn, or an oxide of the impurity elements.

Moreover, the magnetic layer may be of a granular structure in which Fe, Co, FeCo, CoNiPt or other magnetic particles are dispersed in a non-magnetic film comprising the aforementioned components, further a ferrite, iron-rare earth, SiO₂, BN and the like. Moreover, the magnetic layer may have a recording format of either an inner surface type or a vertical type.

The concave/convex forming layer is provided for purpose of controlling concave/convex on a medium surface. The forming method, material, and the like of the concave/convex forming layer are not especially limited. Moreover, a position in which the concave/convex forming layer is formed is not especially limited.

In the magnetic recording medium for a magnetic disk device with a non-contact type recording system, the concave/convex forming layer forms on the medium surface irregularities attributed to the concave/convex of the concave/convex forming layer, in order that the concave/convex of the medium surface prevents adsorption of the magnetic head and the magnetic recording medium, and enhances CSS durability.

Additionally, in the magnetic recording medium for a magnetic disk device with a contact type recording system, the concave/convex forming layer does not need to be formed because the medium surface is preferably as flat as possible to avoid damages on the magnetic head or the magnetic recording medium.

A surface roughness of the concave/convex forming layer is preferably Ra=10 to 50 angstroms. A more preferable range is Ra=10 to 30 angstroms.

When Ra is less than 10 angstroms, the surface of the magnetic recording medium is nearly flat. This is unfavorable, because the magnetic head and the magnetic recording medium adsorb each other, and are damaged, or the head crash is caused by the adsorption to provide critical damages. Moreover, when Ra exceeds 50 angstroms, glide height is enlarged to unfavorably deteriorate a recording density.

Various types of materials and forming methods of the concave/convex forming layer are known, and are not especially limited.

As the material of the concave/convex forming layer, Al, Ti, Cr, Ag, Nb, Ta, Bi, Si, Zr, Cu, Ce, Au, Sn, Pd, Sb, Ge, Mg, In, W, Pb, or another metal, an alloy thereof, or an oxide, nitride or carbide of the metal or alloy can be used. Since formation is facilitated, a single Al, Al alloy, Al oxide (Al₂O₃ or the like), Al nitride (AlN or the like), or another metal mainly composed of Al is desirable.

The concave/convex forming layer may be constituted as a continuous texture film, or discretely distributed island-shaped protrusions. A height of the island-shaped protrusion is preferably in the range of 100 to 500 angstroms, more preferably 100 to 300 angstroms.

The surface roughness of the concave/convex forming layer and the height of the concave/convex (protrusion) can be controlled by the material and composition of the concave/convex forming layer, thermal treatment conditions, and the like.

Examples of another concave/convex forming method include texture forming by mechanical grinding, texture forming by chemical etching, texture forming by energy beam radiation, and the like, or these methods can be combined.

Examples of the protective layer include a Cr film, Cr alloy film, carbon film, zirconia film, silica film, and the like. The protective film can continuously be formed along with the underlayer and the magnetic layer by an in-line type or stationary opposed type sputtering device. Moreover, the protective film may be of a single layer, or a multilayered structure comprising the same type or different types of films.

Alternatively, instead of the aforementioned protective layer, another protective layer may be formed on the protective layer. For example, instead of the protective layer, a silicon oxide (SiO₂) film may be formed by dispersing and applying fine colloidal silica particles in tetraalkoxysilane diluted with alcohol solvent, and further performing calcination. In this case, both functions of the protective layer and the concave/convex forming layer are provided.

Various types of lubricant layers have been proposed, but the lubricant layer is generally formed by applying liquid lubricant comprising perfluoropolyether (PFPE) or the like onto the medium surface in a dipping method (steeping method), spin-coating method, spraying method, or the like, and performing heating treatment if necessary.

### Examples

The present invention will be described hereinafter in more detail substrated on examples.

### Example 1

### (1) Preparation of Glass Substrate

A disk-shaped glass substrate comprising aluminosilicate glass and having a circular hole in its middle (outer diameter of 2.5 inches, inner diameter of 0.8 inch, thickness of 0.25 inch) was prepared. Used as the aluminosilicate glass was a chemical strengthening glass mainly containing, in terms of mol%, 57 to 74% of SiO₂, 0 to 2.8% of ZrO₂, 3 to 15% of Al₂O₃, 7 to 16% of Li₂O, and 4 to 14% of Na₂O.

### (2) Chemical strengthening Process

Subsequently, after the glass substrate was cleaned, chemical reinforcement was applied.

In the chemical reinforcement, a chemical strengthening treatment liquid was prepared by mixing potassium nitrate (60%) and sodium nitrate (40%), the chemical strengthening treatment liquid was heated to 400°C, and the cleaned glass substrate preheated to 300°C was steeped for about three hours. During the steeping, in order to chemically reinforce the entire surface of the glass substrate, a plurality of the glass substrates were placed in a holder in such a manner that end faces were held.

When the steeping treatment in the chemical strengthening treatment liquid was performed in this manner, lithium ions, sodium ions on a surface layer of the glass substrate were replaced with sodium ions, potassium ions in the chemical strengthening treatment liquid, respectively, to reinforce the glass substrate.

A thickness of compression stress layer formed on the surface layer of the glass substrate was about 100 to 200 µm.

### (3) Cooling, Acid Treatment, Cleaning Process

After the chemical reinforcement was completed, the glass substrate was successively and slowly cooled in first, second slow cooling chambers.

First, the glass substrate was lifted up from the chemical strengthening treatment liquid, and transferred to the first slow cooling chamber heated to 300°C, in which the glass substrate was held for about ten minutes and slowly cooled to 300°C. Subsequently, the glass substrate was transferred to the second slow cooling chamber heated to 200°C from the first slow cooling chamber, and was slowly cooled down to 200°C from 300°C.

When the slow cooling is performed in two separate stages in this manner, the glass substrate can be released from damages by thermal strains.

Subsequently, after the slow cooling was completed, the glass substrate was submerged into a water tank of 20°C, quenched and held for about 20 minutes.

After the cooling process was completed, the glass substrate was successively steeped and cleaned in cleaning tanks of neutral detergent, neutral detergent, pure water, pure water, IPA (isopropyl alcohol), and IPA (evaporation drying). Additionally, ultrasonic waves (frequency of 40 kHz) were applied to the cleaning tanks.

### (4) Treatment Process by Fused Salt

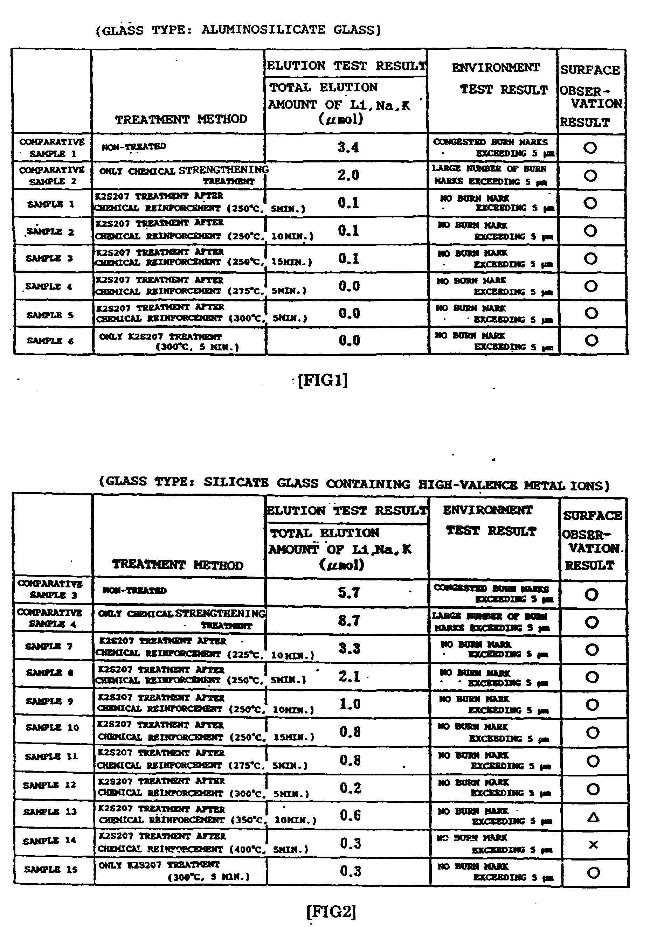

A fused salt of potassium pyrosulfate of guaranteed reagent was used, into which the glass substrate was steeped, and temperature and steeping time were changed as shown in Fig. 1 to perform treatment (samples 1 to 5).

After the cleaning treatment of the treated glass substrate, an elution test and environment test were implemented. Results are shown in Fig. 1. Additionally, for comparison, a sample not subjected to the chemical strengthening treatment or the treatment by potassium pyrosulfate (cleaning process was performed) (comparative sample 1), and a glass substrate subjected to the chemical strengthening treatment and cleaning treatment (treatment by potassium pyrosulfate was not performed) (comparative sample 2) were tested in the same manner. Moreover, a sample (sample 6) on which the chemical strengthening treatment was not performed and only the treatment by potassium pyrosulfate was performed was tested in the same manner.

Additionally, in the elution test, the glass substrate was steeped in an ultra pure water heated to 80°C for 24 hours, an eluted component was measured with ion chromatography, and an elution amount of alkali metal ions per glass substrate (µmol/Disk) was obtained.

In the environment test, the glass substrate was left to stand under a high-temperature humid environment at a temperature of 80°C, relative humidity of 80% for one week, a glass surface was observed with a microscope, and deposition of chloride or the like of alkali by the elution of alkali was observed and evaluated.

### Example 2

Glass type of the glass substrate was a silicate glass containing high-valence metal ions (glass with high Young's modulus). After chemical strengthening treatment (480°C, four hours) and cleaning treatment were performed, treatment was performed with a fused salt of potassium pyrosulfate, and elution test and environment test were implemented in the same manner as in Example 1 (samples 7 to 14). Additionally, for comparison, a sample not subjected to the chemical strengthening treatment or the treatment by potassium pyrosulfate (comparative sample 3), and a glass substrate subjected to the chemical strengthening treatment and cleaning treatment (treatment by potassium pyrosulfate was not performed) (comparative sample 4) were tested in the same manner. Moreover, a sample (sample 15) on which the chemical strengthening treatment was not performed and only the treatment by potassium pyrosulfate was performed was also tested in the same manner. Results are shown in Fig. 2.

Additionally, used as the silicate glass containing high-valence metal ions was a glass containing, in terms of mol%, 45% of SiO₂, 2% of Al₂O₃, 10.4% of Li₂O, 2.6% of Na₂O, 12.5% of MgO, 12.5% of CaO, 13% of TiO₂, and 2% of ZrO₂. Additionally, when a glass containing, in terms of mol%, 45% of SiO₂, 2% of Al₂O₃, 10.4% of Li₂O, 2.6% of Na₂O, 13% of MgO, 13% of CaO, and 14% of TiO₂ was used, the same result was obtained.

### Example 3

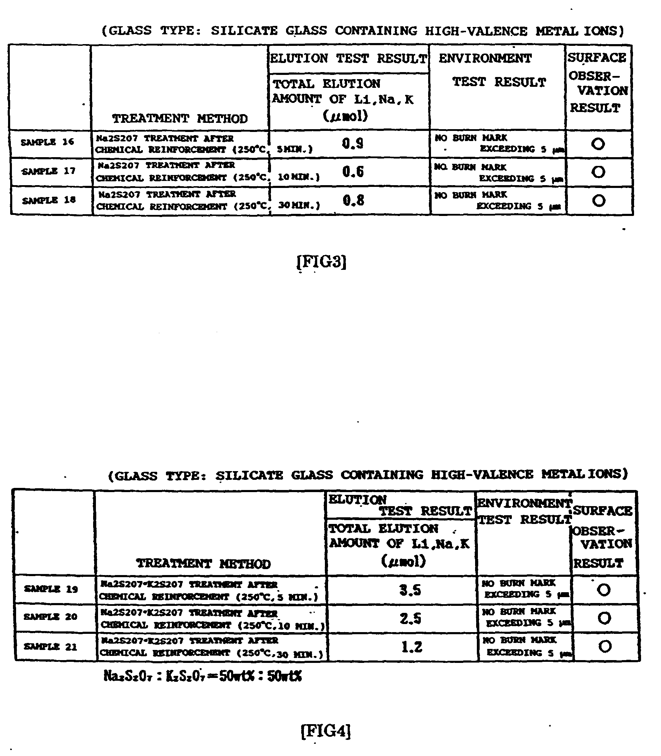

The elution test and environment test were implemented in the same manner as in Example 2 except that a fused salt of sodium pyrosulfate of guaranteed reagent was used instead of the fused salt of potassium pyrosulfate (samples 16 to 18). Results are shown in Fig. 3.

### Example 4

The elution test and environment test were implemented in the same manner as in Example 2 except that a fused salt formed by mixing potassium pyrosulfate of guaranteed reagent and sodium pyrosulfate of guaranteed reagent was used (samples 19 to 21). Results are shown in Fig. 4.

### Example 5

The elution test and environment test were implemented in the same manner as in Example 2 except that a fused salt formed by mixing potassium pyrosulfate and sulfuric acid was used. As a result, the same effect as in Example 2 was recognized.

### Example 6, 7

The elution test and environment test were implemented in the same manner as in Example 1 except that instead of aluminosilicate glass a soda lime glass (Example 6), a soda aluminosilicate glass (Example 7), a borosilicate glass containing heavy metal ions were used. As a result, the same effect as in Example 1 was recognized.

### Example 8

A underlayer comprising Al (film thickness of 50 angstroms), Cr (1000 angstroms) and CrMo (100 angstroms), a magnetic layer comprising CoPtCr (120 angstroms), CrMo (50 angstroms) and CoPtCr (120 angstroms), and a Cr (50 angstroms) protective layer were formed on both surfaces of the magnetic disk glass substrate obtained in Examples 1 to 7 with an in-line type sputtering device.

The substrate was steeped in an organic silicon component solution in which fine silica particles (particle size of 100 angstroms) were dispersed (mixture liquid of water, IPA and tetraethoxysilane), and calcination was performed to form a protective layer comprising SiO₂, and further a lubricant layer was formed by performing a dipping treatment on the protective layer with a lubricant of perfluoropolyether, thereby obtaining a magnetic disk for MR head.

When a glide test was performed on the obtained magnetic disk, no bit or crash was observed. Moreover, it could be confirmed that no defect was generated on the magnetic layer or another film.

Moreover, when the weatherability and life were checked, no deterioration or defect of the magnetic film or the like attributed to change of properties of the glass substrate surface was recognized.

### Example 9

A Cr underlayer, CrMo underlayer, CoPtCr magnetic layer, and C protective layer were successively formed on both surfaces of the magnetic disk glass substrate obtained in Examples 1 to 7 using the in-line type sputtering device, and a magnetic disk was obtained.

The same as in Example 8 was confirmed with the magnetic disk.

### Example 10

A magnetic disk for a thin-film head was obtained in the same manner as in Example 9 except that a underlayer was AlCrCr and a magnetic layer was CoNiCrTa.

The same as in Example 9 was confirmed with the magnetic disk.

The preferred embodiments of the present invention have been described, but the present invention is not necessarily limited to the aforementioned embodiments.

For example, the heating temperature, type, and steeping time of the pyrosulfate or the like are not limited to those of the embodiment, and can appropriately be changed and implemented in accordance with a required quality level or the like. Moreover, the cleaning process can be performed after any optional process in the manufacturing processes as required.

## Claims

1. A method of manufacturing a glass substrate for an information recording medium comprising steps of:
preparing the glass substrate for the information recording medium containing alkali ions;
steeping said glass substrate in a fused salt of pyrosulfate and/or a fused salt of hydrogensulfate; and
cleaning said glass substrate after the steeping.

2. The method of manufacturing the glass substrate for the information recording medium according to claim 1, wherein said fused salt comprises a fused salt of one or two or more salts selected from potassium pyrosulfate, sodium pyrosulfate, potassium hydrogensulfate, and sodium hydrogensulfate.

3. The method of manufacturing the glass substrate for the information recording medium according to claim 1, wherein a temperature of said fused salt is in the range of a fusing temperature or a liquid-phase temperature to 400°C.

4. The method of manufacturing the glass substrate for the information recording medium according to claim 1, wherein a temperature of said fused salt is in the range of 250°C to 350°C.

5. The method of manufacturing the glass substrate for the information recording medium according to claim 1, wherein a temperature of said fused salt is in the range of 250°C to 300°C.

6. The method of manufacturing the glass substrate for the information recording medium according to claim 1, wherein a steeping time in said fused salt is in the range of one minute to 30 minutes.

7. The method of manufacturing the glass substrate for the information recording medium according to claim 1, wherein a glass substrate subjected to a chemical strengthening treatment is used as said glass substrate for the information recording medium.

8. The method of manufacturing the glass substrate for the information recording medium according to claim 1, wherein said glass substrate for the information recording medium is a glass substrate for use in a magnetic disk reproduced on a magnetic reluctance type head.

9. An information recording medium comprising at least a recording layer formed on a glass substrate for the information recording medium obtained using the method of manufacturing the glass substrate for the information recording medium according to any one of claims 1 to 8.

10. A method of manufacturing a glass substrate for an information recording medium comprising steps of:
preparing the glass substrate for the information recording medium containing alkali ions;
steeping said glass substrate in a fused salt formed by adding sulfuring acid to a fused salt of pyrosulfate and/or a fused salt of hydrogensulfate; and
cleaning said glass substrate after the steeping.

11. The method of manufacturing the glass substrate for the information recording medium according to claim 10, wherein said fused salt comprises a fused salt of one or two or more salts selected from potassium pyrosulfate, sodium pyrosulfate, potassium hydrogensulfate, and sodium hydrogensulfate.

12. The method of manufacturing the glass substrate for the information recording medium according to claim 10, wherein a temperature of said fused salt is in the range of a fusing temperature or a liquid-phase temperature to 400°C.

13. The method of manufacturing the glass substrate for the information recording medium according to claim 10, wherein a temperature of said fused salt is in the range of 250°C to 350°C.

14. The method of manufacturing the glass substrate for the information recording medium according to claim 10, wherein a temperature of said fused salt is in the range of 250°C to 300°C.

15. The method of manufacturing the glass substrate for the information recording medium according to claim 10, wherein a steeping time in said fused salt is in the range of one minute to 30 minutes.

16. The method of manufacturing the glass substrate for the information recording medium according to claim 10, wherein a glass substrate subjected to a chemical strengthening treatment is used as said glass substrate for the information recording medium.

17. The method of manufacturing the glass substrate for the information recording medium according to claim 10, wherein said glass substrate for the information recording medium is a glass substrate for use in a magnetic disk reproduced on a magnetic reluctance type head.

18. An information recording medium comprising at least a recording layer formed on a glass substrate for the information recording medium obtained using the method of manufacturing the glass substrate for the information recording medium according to any one of claims 10 to 17.
